# EUROPÄISCHE PATENTSCHRIFT

(11) **EP 2 280 808 B1**
(45) Veröffentlichungstag und Bekanntmachung des Hinweises auf die Patenterteilung: **28.09.2011**
(21) Anmeldenummer: 09734337.0
(22) Anmeldetag: 01.04.2009
(51) Int. Cl.: B25J 17/02, B25J 19/00, B25J 15/06

(54) **VORRICHTUNG ZUM BEWEGEN UND POSITIONIEREN EINES GEGENSTANDES IM RAUM**
DEVICE FOR MOVING AND POSITIONING AN OBJECT IN SPACE
DISPOSITIF DE DÉPLACEMENT ET DE POSITIONNEMENT D'UN OBJET DANS L'ESPACE

(30) Priorität: 22.04.2008 DE 102008001314
(43) Veröffentlichungstag der Anmeldung: 09.02.2011
(73) Patentinhaber: Robert Bosch GmbH, 70442 Stuttgart (DE)
(72) Erfinder: LEHMANN, Christian, 78315 Radolfszell (DE)
(86) Internationale Anmeldenummer: PCT/EP2009/053854
(87) Internationale Veröffentlichungsnummer: WO 2009/130115

(56) Entgegenhaltungen:
- EP-A1- 1 129 829
- FR-A1- 2 647 763
- JP-A- 6 069 317

## Beschreibung

### Technisches Gebiet

Die Erfindung betrifft eine Vorrichtung zum Bewegen und Positionieren eines Gegenstandes im Raum, mit wenigstens drei mit je einer Motor/Getriebeeinheit verbundenen, um eine Motor/Getriebeachse schwenkbaren Betätigungsarmen, wobei das freie Ende jedes Betätigungsarmes über Verbindungsstäbe mit einem Tragelement mit wenigstens einem über einen Vakuumschlauch an eine Vakuumquelle anschliessbaren Greifmittel mit einer Ansaugöffnung zum saugenden Greifen des Gegenstandes gelenkig verbunden ist. Bei der Vorrichtung zum Bewegen und Positionieren eines Gegenstandes im Raum handelt sich um eine in der Fachwelt als Roboter mit Parallelkinematik bezeichnete, auch unter dem Begriff "Delta-Roboter" bekannte Vorrichtung.

### Stand der Technik

Die Schlauchführungen vom Greifwerkzeug zur Vakuumversorgung erfolgt bei Delta-Robotern konventionell über die Verbindungsstäbe und über ein ca. 1500 mm langes, freihängendes Schlauchstück. Dieser freitragende Schlauch benötigt einerseits Stabilität, um selbsttragend im Raum zu hängen, und andererseits Flexibilität, um die extremen Bewegungen des Roboters zu gewährleisten. Der Schlauch wird sowohl auf Torsion als auch auf Biegung belastet und kann zu schwingen beginnen. Wenn sich Roboter und Schlauch in entgegengesetzter Richtung bewegen, kann ein Ruck auftreten, der nicht nur die Genauigkeit des Roboters beeinträchtigt, sondern auch den Schlauch stark belastet. Aus diesem Grund ist der Schlauch einem hohen Verschleiss ausgesetzt und muss deshalb bereits nach kurzer Zeit ersetzt werden.

Aus der EP 1 129 829 A1 ist bereits ein Roboter zum Handling von Produkten in einem dreidimensionalen Raum bekannt. Der Roboter umfasst eine Basis, an der drei Arme schwenkbar angeordnet sind. Jeder Arm ist mit einem Schaft eines Servomotors verbunden. Greifer können über einen Vakuumschlauch mit einer Vakuumquelle verbunden werden.

### Darstellung der Erfindung

Der Erfindung liegt die Aufgabe zugrunde, eine Schlauchführung für eine Vorrichtung der eingangs genannten Art vorzuschlagen, die gegenüber der aus dem Stand der Technik bekannten Schlauchführung mit freitragendem Schlauch eine geringere Verschleissanfälligkeit aufweist.

Zur erfindungsgemässen Lösung der Aufgabe führt, dass der Vakuumschlauch vom Tragelement zur Motor/Getriebeachse einer der Motor/Getriebeeinheiten geführt und über ein im Wesentlichen in der Motor/Getriebeachse angeordnetes und um die Motor/Getriebeachse drehbares Schlauchgelenk mit der Vakuumquelle verbindbar ist.

Die Torsion des Schlauches wird durch ein drehbares Kupplungsteil freigegeben. Da ein Delta-Roboter in der Motor/Getriebeachse der Betätigungsarme nur eine reine Rotationsbewegung aufweist, wird dieses Kupplungsteil in die Rotationsachse eines der Betätigungsarmantriebe gelegt. Der Schlauch muss somit nur noch die Winkelbewegungen zwischen Betätigungsarm und den Verbindungsstäben sowie des Tragelementes ausgleichen können, was nur noch kleine Biegemomente im Schlauch auslöst. Damit kann der Schlauch am Betätigungsarm und an den Verbindungsstäben eng geführt werden.

Da der Betätigungsarm sich bewegt, wird der Schlauch weiter in Richtung der Motorachse verlegt. Am Ende des Betätigungsarmes ist der Schlauch mit einem Winkelstück versehen, welches den drehbaren Teil eines "Schlauchgelenkes" bildet. Die Rotationsachse befindet sich dabei annähernd in der Motor/Getriebeachse des Betätigungsarmes.

Bevorzugt ist der Vakuumschlauch entlang der Verbindungsstäbe und Betätigungsarme geführt und mittels Befestigungselementen lösbar fixiert ist.

Das Befestigungselement am Betätigungsarm ist vorzugsweise schwingungsdämpfend und spielausgleichend montiert.

Damit sich das drehbare Schlauchgelenk schnell und ohne Werkzeug zerlegen lässt, ist es bevorzugt mit einem Schnellverschluss, insbesondere mit einer Schottverschraubung oder einem Bajonettverschluss, ausgestattet.

Die erfindungsgemässe Schlauchführung hat im Vergleich zur bisherigen Lösung mit freitragendem Schlauch folgende Vorteile:
- Schnelle Demontage der Schläuche zur Reinigung
- Die Schläuche werden durch die Freigabe der Torsion weniger belastet, es können weichere Schläuche verwendet werden, die Lebensdauer wird erhöht
- Höhere Sicherheit durch besser kontrollierte Schlauchführung
- Höhere Genauigkeit durch geringere Störkräfte auf den Roboter
- Schwingungen der Schläuche werden vermieden

### Kurze Beschreibung der Zeichnung

Weitere Vorteile, Merkmale und Einzelheiten der Erfindung ergeben sich aus der nachfolgenden Beschreibung bevorzugter Ausführungsbeispiele sowie anhand der Zeichnung; diese.zeigt schematisch in
- Fig. 1: eine Schrägsicht auf einen Delta-Roboter;
- Fig. 2: eine Schrägsicht auf einen mit Elementen zur erfindungsgemäs- sen Schlauchführung bestückten Delta-Roboter;
- Fig. 3: das Prinzip der Schlauchverlegung am Delta-Roboter von Fig. 2;
- Fig. 4 - 6: Schrägsichten auf die Schlauchgelenkanordnung von Fig. 2 in vergrösserter Darstellung;
- Fig. 7: eine Schrägsicht auf eine Schlauchbefestigung an einem Verbindungsarm von Fig. 2 in vergrösserter Darstellung;

### Beschreibung von Ausführungsbeispielen

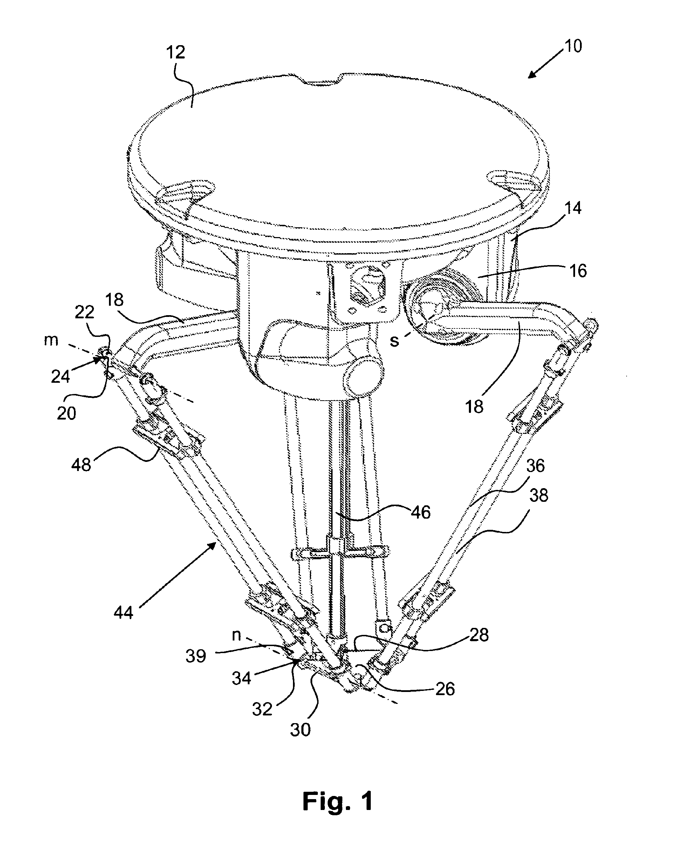

Ein in Figur 1 dargestellter Delta-Roboter 10 weist ein Basiselement 12 mit einer horizontalen Montageebene und drei vom Basiselement 12 abragende Halterungen 14 zur Aufnahme je einer Motor/Getriebeeinheit 16 auf. Auf je einer eine Motor/Getriebeachse s definierenden Getriebewelle jeder Motor/Getriebeeinheit 16 sitzt ein um die Motor/Getriebeachse s schwenkbarer Betätigungsarm 18. Die drei Motor/Getriebeachsen s liegen in einer Ebene parallel zur Montageebene des Basiselements 12, und ihre Schnittpunkte bilden die Ecken eines gleichseitigen Dreiecks. Am freien Ende jedes Betätigungsarmes 18 ist ein erster, eine parallel zur Motor/Getriebeachse s liegende erste Gelenkachse m definierender erster Gelenkstab 20 festgelegt. Jeder erste Gelenkstab 20 weist an seinen beiden Enden je ein erstes Gelenkteil 22 je eines ersten Kugelgelenks 24 auf. Die paarweise angeordneten ersten Gelenkteile 22 sind bezüglich je einer Vertikalebene spiegelsymmetrisch zueinander angeordnet, wobei sich die drei Vertikalebenen in einer gemeinsamen, eine Symmetrieachse für die Anordnung der drei Motor/Getriebeeinheiten 18 bildenden Vertikalachse schneiden und untereinander einen Winkel von je 120° einschliessen.

Ein im wesentlichen als Platte mit ein gleichseitiges Dreieck bildenden Seitenkanten 28 ausgestaltetes Tragelement 26, auch Werkzeugträger oder Plattform genannt, ist an jeder der drei Seitenkanten 28 mit einem zweiten, eine zweite Gelenkachse n definierenden zweiten Gelenkstab 30 ausgestattet. Jeder zweite Gelenkstab 30 weist an seinen beiden Enden je ein erstes Gelenkteil 32 je eines zweiten Kugelgelenks 34 auf. Die paarweise angeordneten ersten Gelenkteile 32 jedes zweiten Gelenkstabs 30 sind bezüglich einer Winkelhalbierenden des das Tragelement 26 charakterisierenden gleichseitigen Dreiecks spiegelsymmetrisch zueinander angeordnet.

Der Abstand zwischen den ersten Gelenkteilen 22 am freien Ende jedes Betätigungsarmes 18 ist identisch mit dem Abstand zwischen den ersten Gelenkteilen 32 an den Seitenkanten 28 des Tragelements 26.

Jedem Betätigungsarm 18 ist eine Seitenkante 28 des Tragelements 26 zugeordnet. Je ein Paar identisch ausgestalteter Verbindungsstäbe 36, 38, auch Parallelogrammstäbe genannt, weisen an ihren Enden ein Endstück 39 mit je einem zweiten Gelenkteil 40, 42 auf. Jedes zweite Gelenkteil 40, 42 bildet mit einem ersten Gelenkteil 22, 32 am freien Ende des Betätigungsarmes 18 bzw. an der Seitenkante 28 des Tragelements 26 ein entsprechendes erstes bzw. zweites Kugelgelenk 24, 34.

In kurzem Abstand zu den ersten und zweiten Kugelgelenken 24, 34 sind die beiden Verbindungsstäbe 36, 38 über ein im wesentlichen parallel zu den Gelenkachsen m, n liegendes Vorspannelement 48 miteinander verbunden.

Die ersten Gelenkteile 22, 32 am freien Ende des Betätigungsarmes 18 bzw. an der Seitenkante 28 des Tragelements 26 sind als Gelenkkugeln, die zweiten Gelenkteile 40, 42 an den Endstücken 39 der Verbindungsstäbe 36, 38 als Gelenkpfannen ausgestaltet.

Die beiden gleich langen Verbindungsstäbe 36, 38 bilden zusammen mit den beiden ebenfalls gleich langen Gelenkstäben 20, 30 ein Parallelogrammgestänge 44 mit je einem Kugelgelenk 24, 34 an jedem Eckpunkt des Parallelogramms. Die Verbindung der Betätigungsarme 18 mit dem Tragelement 26 über je ein Parallelogrammgestänge 44 verhindert die Rotation des Tragelements 26 um Achsen in allen drei Raumdimensionen. Das Tragelement 26 kann sich demnach nur parallel zu sich selbst in Reaktion auf eine Bewegung der Betätigungsarme 18 bewegen. Die gesteuerte Schwenkbewegung der Betätigungsarme 18 um deren Motor/Getriebeachsen s wird demzufolge in eine lineare Bewegung des Tragelements 26 umgewandelt.

Das Tragelement 26 ist mit dem Basiselement 12 über eine teleskopisch in ihrer Länge verstellbare zentrale Welle 46 zur Übertragung von Drehmomenten verbunden. Die zentrale Welle 46 ist über ein Kardangelenk am Tragelement 26 festgelegt. An ihrem dem Tragelement 26 entgegengesetzten Ende ist die zentrale Welle 46 mit einer Antriebswelle eines in der Zeichnung nicht dargestellten Servomotors verbunden. Über die zentrale Welle 46 kann eine Drehung des Tragelements 26 im dreidimensionalen Raum erzeugt werden.

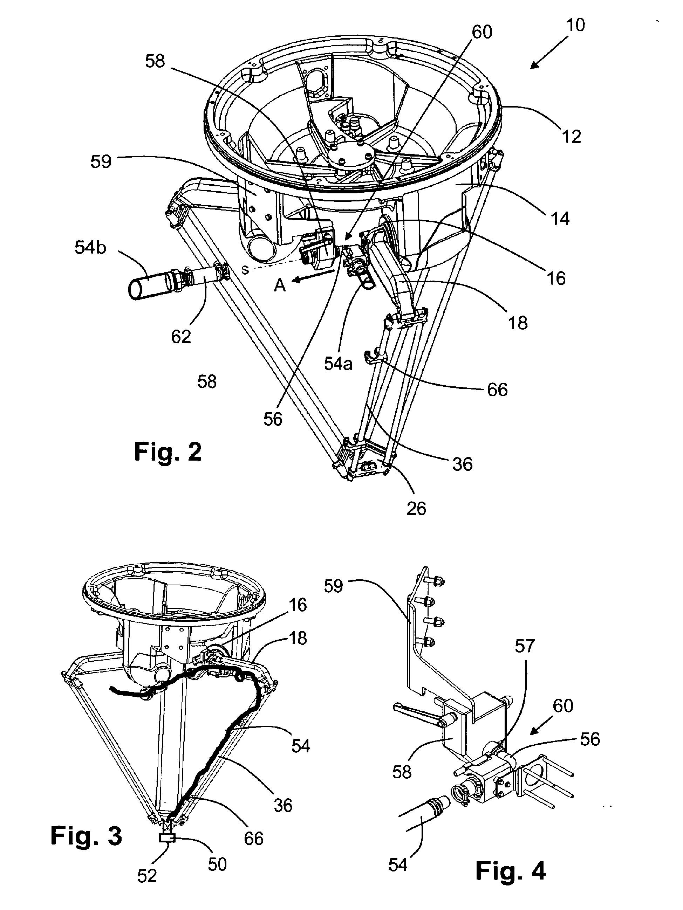

Wie aus Fig. 3 ersichtlich, ist am Tragelement 26 ein nach unten abragendes Greifelement 50 mit einer Ansaugöffnung 52 zum saugenden Greifen eines Gegenstandes montiert. Am Greifelement 50 ist ein die Ansaugöffnung 52 mit einer in der Zeichnung nicht dargestellten Vakuumquelle verbindender Vakuumschlauch 54, 54a, 54b lösbar festgelegt. Der Vakuumschlauch 54, 54a, 54b ist entlang eines Verbindungsstabes 36 nach oben geführt und am Verbindungsstab 36 in Schlauchhaltern 66 lösbar fixiert. Diese Schlauchhalter 66 können zusätzlich zur Aufnahme von Pneumatikschläuchen 55 ausgebildet sein.

Bei einer Schlauchführung nach dem Stand der Technik ist der Vakuumschlauch 54, 54a, 54b am oberen Ende des Verbindungsstabes 36 über ein ca. 50 cm langes, freihängendes Schlauchstück mit der in der Zeichnung nicht dargestellten Vakuumquelle verbunden.

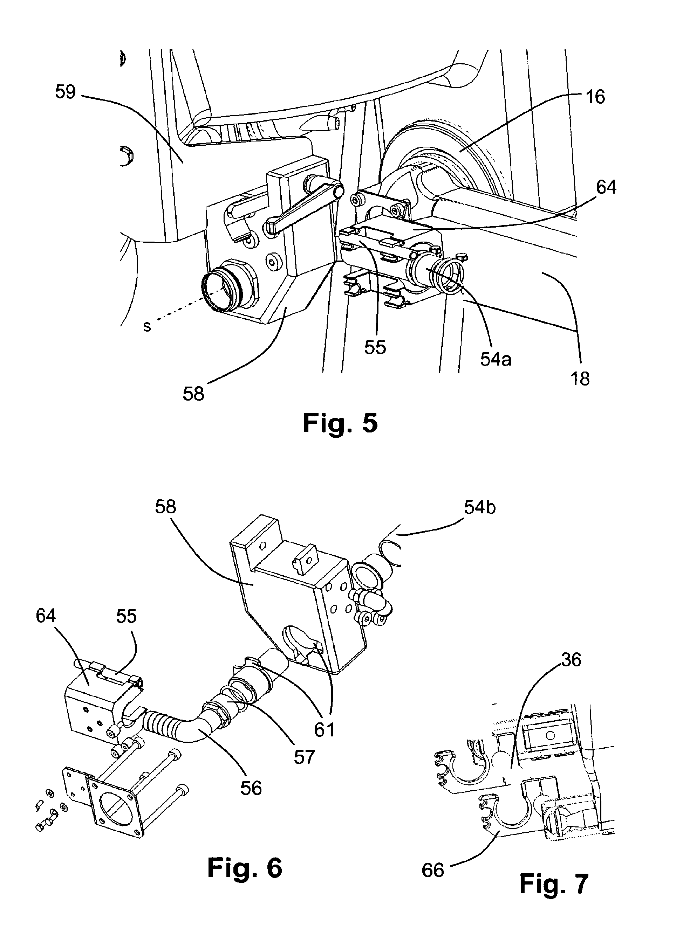

Wie in den Fig. 2 - 7 gezeigt, ist der Vakuumschlauch 54, 54a, 54b bei einer erfindungsgemässen Schlauchführung vom oberen Ende des Verbindungsstabes 36 entlang des Betätigungsarmes 18 zur Motor/Getriebeachse s geführt und geht in ein Winkelstück 56 über. Das freie Ende des Winkelstücks 56 liegt in der Motor/Getriebeachse s und ist als drehbares Gelenkteil 57 eines Schlauchgelenkes 60 in ein am Basiselement 12 des Roboters 10 über einen Schnellverschluss lösbar befestigtes Kupplungs- und Lagerteil 58 einsetzbar. Dieses stationär angeordnete Kupplungs- und Lagerteil 58 ist über ein weiteres, mit dem Kupplungs- und Lagerteil 58 über ein Kupplungsstück 62 lösbar verbindbares Schlauchteil 54b mit einer in der Zeichnung nicht dargestellten Vakuumquelle verbunden.

Das Schlauchgelenk 60 besteht somit aus dem mit einem Schnellverschluss an einer am Basiselement 12 des Roboters 10 festgelegten Montageplatte 59 befestigten, feststehenden Kupplungs- und Lagerteil 58 und dem beweglichen, zum Betätigungsarm 18 führenden Winkelstück 56.

Das komplette Schlauchgelenk 60 kann gemäss Fig. 2 in Pfeilrichtung A demontiert werden. Die Schläuche werden ausgeklickt und können somit ersetzt bzw. gereinigt werden. Das gilt sowohl für den Vakuumschlauch 54 als auch für die Pneumatikschläuche 55.

Das Winkelstück 56 ist in eine am Betätigungsarm 18 über Dämpfungsgummis leicht beweglich angebrachte Kulisse 64 lösbar eingerastet. Diese Kulisse 64 überträgt einmal das notwendige Drehmoment vom Betätigungsarm 18 auf das Schlauchgelenk 60 und den Schlauch 54, 54a kann aber gleichzeitig kleine Achstoleranzen in Position und Flucht zwischen der Rotationsachse des Schlauchgelenkes und der Motor/Getriebeachse s des Betätigungsarmes 18 ausgleichen. Weiter wirkt diese Kulisse 64 schwingungsdämpfend. Die Kulisse 66 kann zusätzlich zur Aufnahme von Pneumatikschläuchen 55 ausgebildet sein.

Das drehbare Gelenkteil 57 ist mittels Schottverschraubung 61 oder Bajonettverschluss mit dem Kupplungs- und Lagerteil 58 verbindbar und kann auf einfache Weise demontiert werden. Hierzu wird der Schlauch 54, 54a mit dem Winkelstück 56 aus den Schnappverbindungen gezogen und das Schlauchgelenk nach hinten verdreht, so dass die Schottverschraubung 61 das Gelenk freigibt.

Weiter können alle Schläuche über Klicksysteme ausgetauscht werden.

Die Konstruktion ist als "Wipe"- und "Waschdown"- Konstruktion ausgeführt. Strömungstechnisch ist die Konstruktion so entwickelt, dass sich keine mechanischen Bauteile im Luftstrom befinden, so dass eine optimale Reinigung sichergestellt ist.

Entlang des Vakuumschlauches 54 können -- z. B. zur Bedienung von Ventilen -- zusätzlich Pneumatikschläuche 55 geführt sein. Da diese Pneumatikschläuche nur kleine Durchmesser und eine hohe Flexibilität aufweisen, ist es hier nicht erforderlich, diese mittels eines Drehgelenkes zu trennen. Diese Schläuche können vielmehr ohne Nachteil durch ein entsprechend ausreichend langes, freitragendes Schlauchstück auf den Betätigungsarm geführt werden.

## Patentansprüche

1. Vorrichtung zum Bewegen und Positionieren eines Gegenstandes im Raum, mit wenigstens drei mit je einer Motor/Getriebeeinheit (16) verbundenen, um eine Motor/Getriebeachse (s) schwenkbaren Betätigungsarmen (18), wobei das freie Ende jedes Betätigungsarmes (18) über Verbindungsstäbe (36, 38) mit einem Tragelement (26) mit wenigstens einem über einen Vakuumschlauch (54, 54a, 54b) an eine Vakuumquelle anschliessbaren Greifmittel (50) mit einer Ansaugöffnung (52) zum saugenden Greifen des Gegenstandes gelenkig verbunden ist,
**dadurch gekennzeichnet, dass**
der Vakuumschlauch (54, 54a, 54b) vom Tragelement (26) zur Motor/Getriebeachse (s) einer der Motor/Getriebeeinheiten (16) geführt und über ein im Wesentlichen in der Motor/Getriebeachse (s) angeordnetes und um die Motor/Getriebeachse (s) drehbares Schlauchgelenk (60) mit der Vakuumquelle verbindbar ist.

2. Vorrichtung nach Anspruch 1, **dadurch gekennzeichnet, dass** der Vakuumschlauch (54, 54a, 54b) entlang Verbindungsstäben (36, 38) und Betätigungsarmen (18) geführt und mittels Befestigungselementen (66, 64) lösbar fixiert ist.

3. Vorrichtung nach Anspruch 2, **dadurch gekennzeichnet, dass** das Befestigungselement (64) am Betätigungsarm (18) schwingungsdämpfend und spielausgleichend montiert ist.

4. Vorrichtung, nach einem der Ansprüche 1 bis 3, **dadurch gekennzeichnet, dass** das drehbare Schlauchgelenk (60) mit einem Schnellverschluss (61), insbesondere mit einer Schottverschraubung oder einem Bajonettverschluss, ausgestattet ist.

## Claims

1. Device for moving and positioning an object in space, with at least three actuating arms (18) connected in each case to a motor/gear unit (26) and pivotable about a motor/gear axis (s), the free end of each actuating arm (18) being connected in an articulated manner by connecting rods (36, 38) to a carrying element (26) with at least one gripping means (50) connectable via a vacuum hose (54, 54a, 54b) for a vacuum source and having a suction port (52) for gripping the object by suction, **characterized in that** the vacuum hose (54, 54a, 54b) is led from the carrying element (26) to the motor/gear axis (axes) of one of the motor/gear units (16) and is connectable to the vacuum source via a hose joint (60) arranged essentially in the motor/gear axis (axes) and rotatable about the motor/gear axis (axes).

2. Device according to Claim 1, **characterized in that** the vacuum hose (54, 54a, 54b) is guided along connecting rods (36, 38) and actuating arms (18) and is fixed releasably by means of fastening elements (66, 64).

3. Device according to Claim 2, **characterized in that** the fastening element (64) is mounted on the actuating arm (18) in a vibration-damping and play-compensating manner.

4. Device according to one of Claims 1 to 3, **characterized in that** the rotatable hose joint (60) is equipped with a quick-action fastening (61), in particular with a bulkhead stuffing box or with a bayonet fastening.

## Revendications

1. Dispositif de déplacement et de positionnement d'un objet dans l'espace, comprenant au moins trois bras d'actionnement (18) connectés chacun à une unité moteur/transmission (16), pouvant pivoter autour d'un axe de moteur/transmission (s), l'extrémité libre de chaque bras d'actionnement (18) étant connectée de manière articulée par le biais de barres de liaison (36, 38) à un élément porteur (26) avec au moins un moyen de préhension (50) pouvant être raccordé à une source de vide par le biais d'un tuyau de vide (54, 54a, 54b) avec une ouverture d'aspiration (52) pour venir en prise par aspiration avec l'objet,
**caractérisé en ce que**
le tuyau de vide (54, 54a, 54b) est guidé de l'élément porteur (26) vers l'axe de moteur/transmission (s) de l'une des unités moteur/transmission (16) et peut être connecté à la source de vide par le biais d'une articulation de tuyau (60) disposée essentiellement dans l'axe de moteur/transmission (s) et pouvant tourner autour de l'axe de moteur/transmission (s).

2. Dispositif selon la revendication 1, **caractérisé en ce que** le tuyau de vide (54, 54a, 54b) est guidé le long de barres de liaison (36, 38) et de bras d'actionnement (18) et est fixé de manière amovible au moyen d'éléments de fixation (66, 64).

3. Dispositif selon la revendication 2, **caractérisé en ce que** l'élément de fixation (64) est monté sur le bras d'actionnement (18) de manière à amortir les vibrations et à compenser le jeu.

4. Dispositif selon l'une quelconque des revendications 1 à 3, **caractérisé en ce que** l'articulation de tuyau rotative (60) est munie d'une fermeture rapide (61), notamment avec un vissage pour cloison ou une fermeture à baïonnette.
